# EUROPÄISCHE PATENTSCHRIFT

(11) **EP 1 264 508 B1**
(45) Veröffentlichungstag und Bekanntmachung des Hinweises auf die Patenterteilung: **24.04.2013**
(21) Anmeldenummer: 01913806.4
(22) Anmeldetag: 09.02.2001
(51) Int. Cl.: H04Q 11/04

(54) **VERFAHREN UND VORRICHTUNG ZUM ERFASSEN VON NUTZKANALUNTERBRECHUNGEN BEI ISDN-VERBINDUNGEN**
METHOD AND DEVICE FOR DETECTING INTERRUPTIONS OF SPEECH/DATA CHANNELS IN ISDN CONNECTIONS
PROCEDE ET DISPOSITIF DE DETECTION D'INTERRUPTIONS DES CANAUX UTILES DANS LE CAS DE CONNEXIONS RNIS

(30) Priorität: 04.03.2000 DE 10010784
(43) Veröffentlichungstag der Anmeldung: 11.12.2002
(73) Patentinhaber: Deutsche Telekom AG, 53113 Bonn (DE)
(72) Erfinder: KESSLER, Steffen, 57299 Burbach (DE); KITZ, Lothar, 35327 Ulrichstein (DE)
(74) Vertreter: Borchert, Uwe Rudolf
(86) Internationale Anmeldenummer: PCT/EP2001/001436
(87) Internationale Veröffentlichungsnummer: WO 2001/067800

(56) Entgegenhaltungen:
- DE-A- 4 407 046
- DE-C- 19 729 072

## Beschreibung

Die Erfindung betrifft ein Verfahren und eine Schaltungsanordnung Zum Feststellen, Festhalten und Lakalisceiren von Unterbrechungen der Nutzhanäle in Telekommunikationsnetzen, insbesondere mit ISDN-Verbindungen, nach dem Oberbegriff des Patentanspruchs 1 bzw. des Patentanspruchs 4.

Verfahren und Vorrichtungen zum Prüfen und Feststellen bzw. Lokalisieren von Unterbrechungen von Datenübertragungssystemen, insbesondere bei ISDN-Verbindungen sind grundsätzlich bekannt, wie in CCITT-Empfehlungen der I-Serie, ISDN, "Das diensteintegrierende digitale Fernmeldenetz" herausgegeben von Dipl.-Ing. Joachim Claus, Dezember 1993, R.v. Decker's Verlag, G. Schenck, Heidelberg, beschrieben. Bei ISDN-Verbindungen entsteht immer wieder das Problem, eine Unterbrechung der Nutzkanäle festzustellen bzw. zu lokalisieren. Im Signalisierungskanal ist eine in dieser Weise gestörte Verbindung von einer störungsfreien Verbindung normalerweise nicht zu unterscheiden. Diese Tatsache resultiert daraus, dass die Gesprächspartner auf beiden Seiten der Verbindung wegen einseitiger Verständigung oder Abbruch der Verbindung das Gespräch durch Auflegen beenden.

In der ITU-T-Empfehlung V.54 ist ab Seite 309 die Bildung von Schleifenschaltungen für Modems beschrieben. Daraus geht auch hervor, dass es wichtig ist, dass durch die Verringerung der Unterbrechungszeiten auf solchen Verbindungen Verbesserungen erzielt werden. Die Feststellung der Fehlerorte kann in vielen Fällen durch Schleifenschaltungen in den Modems erreicht werden. Diese Schleifen erlauben örtliche oder ferne Prüfungen - analog oder digital -, die wahlfrei von den Verwaltungen/Betriebsgesellschaften und/oder den betroffenen Benutzern ausgeführt werden können. Zur Zeit besteht jedoch keine Möglichkeit, mit der man eine Nutzkanalunterbrechung messtechnisch erfassen könnte. Es besteht nur die Möglichkeit, den Verbindungsweg zu verfolgen, Teile des Verbindungsweges zu sperren und zu beobachten, ob die Unterbrechung wieder auftritt oder nicht. Eine Aufzeichnung der Nutzkanaldaten gestaltet sich schwierig, weil erstens eine sehr große Datenmenge aufgezeichnet werden muss und zweitens die zur Verfügung stehenden Messgeräte nicht in der Lage sind, alle Nutzkanaldaten aufzuzeichnen.

Es ist deshalb wichtig, dass die beschriebenen Abbrüche bzw. einseitigen Verständigungen festgestellt und lokalisiert werden können. Ein weiteres Hindernis bei der Eingrenzung eines solchen Fehlers stellt die Tatsache dar, dass eine Unterbrechung nicht von einer Sprachpause zu unterscheiden ist.

Die DE 197 29 072 C1 betrifft ein Verfahren zur Datenbereitstellung für die Messung und/oder Protokollierung eines ISDN-Basisanschlusses. Eine Uₖ₀-Schnittstelle wird an mindestens einer für die Messung bzw. Protokollierung geeignete Stelle zwischen Leitungsabschluss und Netzabschluss aufgetrennt. An der aufgetrennten Uₖ₀-Schnittstelle werden die Leitungssignale in IOM-Signale konvertiert. Daten des Anschlusses über die S₀-Schnittstelle stehen somit zur Verfügung. Weiterhin offenbart die DE 197 29 072 C1, dass an einem ISDN-Basisanschluss in Punkt- zu Punkt-Konfigurationen oder Punkt zu Mehrpunkt-Konfigurationen mit Daueraktivierung, an dem im Ruhezustand ständig alle 10 Sekunden Nachrichten übertragen werden, so dass eine Unterbrechung der Anschlussleitung prinzipiell erkannt werden kann.

Der Erfindung liegt deshalb die Aufgabe zugrunde, ein Verfahren zur Feststellung und Erfassung von Nutzkanalunterbrechungen zu schaffen, das in der Lage ist, auf relativ einfache Art und Weise eine gestörte Verbindung von einer störungsfreien Verbindung einer ISDN-Verbindung zu unterscheiden und damit festzustellen bzw. lokalisieren, ohne dass eine große Datenmenge aufgezeichnet werden muss bzw. komplizierte Messgeräte erforderlich sind, und eine Schaltungsanordnung zur Durchführung des Verfahrens zu schaffen.

Das erfindungsgemäße Verfahren ist im Kennzeichen des Patentanspruchs 1 charakterisiert.

Weitere Lösungen bzw. Ausgestaltungen der Erfindung sind in den Kennzeichen der Patentansprüche 2 und 3 charakterisiert.

Die Schaltungsanordnung zur Durchführung des Verfahrens ist im Patentanspruch 4 charakterisiert.

Nach dem erfindungsgemäßen Verfahren wird in das Netz ein Ton eingespeist, der ständig oder zyklisch zur Sprachpausenfüllung übertragen wird. Dadurch ist eine Sprechpause von einer Unterbrechung des Nutzkanals messtechnisch zu unterscheiden. Bei einer gestörten bestehenden Verbindung kann somit eine Unterbrechung gemessen und lokalisiert werden. Alternativ zur Erzeugung eines Tones kann auch im B-Kanal ein definierbares Bitmuster eingespeist werden.

Von der erfindungsgemäßen Schaltungsanordnung wird gemäß dem oben genannten Verfahren ein Signal erzeugt, dass von dem vorhandenen Decoder zwar noch erkannt und codiert wird, jedoch beim Empfänger nicht zu hören ist bzw. ausgegeben wird. Durch den eingespeisten Pilot entsteht eine analoge Überlagerung mit dem Sprachsignal, wodurch sich auch eine Änderung der zu übertragenden Daten ergibt. Dadurch wird in den Sprachpausen das durch den Ton entstehende Datensignal, der sogenannte Pilot, ständig übertragen. Dieser Pilot kann im Störungsfall bis zu der Stelle verfolgt werden, wo die Störung auftritt bzw. vorliegt.

Das im nachfolgenden beschriebene Ausführungsbeispiel ist anhand der Einspeisung eines analogen Tones beschrieben, weil eine Einspeisung zum Beispiel an einer S₀-Schnittstelle zusätzlich einen Aufwand bedeuten würde. Das heißt jedoch nicht, daß das erfindungsgemäße Verfahren und die Schaltungsanordnung zur Durchführung des Verfahrens nur darauf beschränkt ist. Dies stellt wie gesagt nur eine Variante der Lösung dar, die ohne zusätzlichen Aufwand an der S₀-Schnittstelle auskommt. Weitere Vorteile, Merkmale und Anwendungsmöglichkeiten der vorliegenden Erfindung ergeben sich aus der nachfolgenden Beschreibung in Verbindung mit dem in der Zeichnung dargestellten Ausführungsbeispiel.

Die Erfindung wird im folgenden anhand von in der Zeichnung dargestellten Ausführungsbeispielen näher beschrieben. In der Beschreibung, in den Patentansprüchen, der Zusammenfassung und in der Zeichnung werden die in der hinten angeführten Liste der Bezugszeichen verwendeten Begriffe und zugeordneten Bezugszeichen verwendet.

In der Zeichnung bedeuten:
- Fig. 1: ein prinzipielles Blockschaltbild eines Testgerätes und
- Fig. 2: ein Telekommunikationsnetzwerk mit ISDN-Netzknoten, einem Meßgerät, zwei Endgeräten und einer Fehlerquelle.

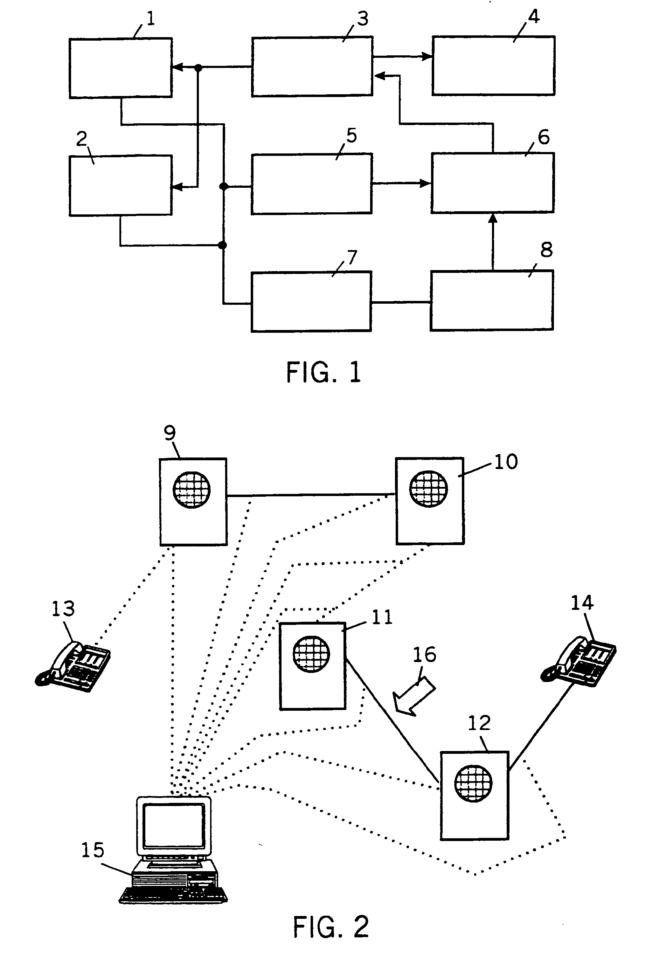

Bevor das Testgerät im einzelnen nach Fig. 1 beschrieben wird, sollen im nachfolgenden zunächst einmal das Grundsätzliche des Verfahrens und auch die einzelnen Verfahrensschritte detailliert beschrieben werden.

Gemäß dem vorliegenden Verfahren wird ein Ton in das Netz eingespeist, der von einem bekannten, hier nicht dargestellten Oszillator erzeugt wird. Dieser Ton wird ständig übertragen, wodurch eine Sprechpause von einer Unterbrechung im Nutzkanal meßtechnisch zu unterscheiden ist. Bei einer gestörten bestehenden Verbindung kann somit eine Unterbrechung gemessen, festgestellt und auch lokalisiert werden. Eine Alternative zur Erzeugung eines Tones besteht noch darin, daß in den B-Kanal ein definiertes bzw. definierbares Bitmuster eingespeist wird.

Das vom Oszillator erzeugte Signal hat im vorliegenden Ausführungsbeispiel eine Frequenz von 100 Hertz und eine Amplitude von 50 mV. Diese Werte wurden gewählt, weil ein derartiges Signal vom Codierer/Decodierer 7 des Testgerätes nach Fig. 1 noch codiert wird und beim Empfänger aber nicht störend wiedergegeben/ausgegeben wird bzw. zu hören ist. Das durch den eingespeisten Ton im Nutzkanal entstehende Bitmuster wird den Sprachdaten überlagert. Dadurch wird in Sprachpausen das durch den Ton entstehende Bitmuster, das hier Pilot genannt werden soll, ständig übertragen. Der Pilot kann im Störungsfall bis zu der Stelle verfolgt werden, wo die Störung vorliegt, so daß somit eine eindeutige Lokalisierung erreicht wird.

Das nachfolgende Ausführungsbeispiel geht auf die Lösung mit der Einspeisung eines analogen Tones ein, weil eine Einspeisung zum Beispiel an der S₀-Schnittstelle einen zusätzlichen technischen Aufwand bedeuten würde. Die Auswertung des D-Kanal kann in einer Variante als Referenz zur Auswertung des Piloten dienen.

Die analoge Auswertung 8 gemäß Fig. 1 kann verwendet werden, um zu überprüfen, ob der Pilot im Nutzkanal an der Meßstelle meßbar ist. Mit einem nicht dargestellten Vorverstärker kann das Nutzsignal verstärkt werden. Ein ebenfalls nicht dargestellter Saugkreis sorgt dafür, daß der Pilot von den Nutzsignalen getrennt wird. Durch den Vergleicher 6 in Fig. 1 wird ermittelt, ob der Pilot im Nutzkanal erkannt wurde oder nicht. Die Empfindlichkeit dieses Vergleichers 6 ist einstellbar ausgeführt. Außerdem wird die Erkennung des Piloten durch Anzeigemittel 4, zum Beispiel eine LED-Anzeige sichtbar gemacht.

Erfolgt die Auswertung an digitalen Schnittstellen, dann müssen die Nutzsignale von der entsprechenden digitalen Schnittstelle 1 oder 2 in analoge Signale umgewandelt werden, um die analoge Auswertung auch im Netz verwenden zu können. Die analoge Auswertung 8 ist dem Codierer/Decodierer 7 nachgeschaltet und das Ausgangssignal wird auf den Vergleicher 6 gegeben.

Das Blockschaltbild eines Testgerätes ist in Fig. 1 wiedergegeben. Es besteht aus einem Codierer/Decodierer 7 der mit den Schnittstellen 1 und 2 verbunden ist und das von einem nichtdargestellen Oszillator erzeugte Signal noch erkennt und codiert. Der Ausgang des Codierers/Decodierers 7 ist mit dem Eingang einer analogen Auswertung 8 verbunden und einem Vergleicher 6 für Gespräch/Testsignal zwecks Auswertung. Am anderen Eingang des Vergleichers 6 liegt die digitale Auswertung 5, die die durch den eingespeisten Ton im Nutzkanal entstehenden Datensignale auswertet. Der Ausgang des Vergleichers 6 ist mit einem Controller 3 verbunden, der seinerseits mit den Schnittstellen 1 und 2, die zum Beispiel als S₀-Interface und als S_{2M} ausgeführt sind, in Verbindung steht. Außerdem ist der Controller 3 mit einer Anzeige 4 verbunden, in der die Erkennung des Piloten mit Hilfe zum Beispiel von LEDs angezeigt wird.

In Fig. 2 ist ein Telekommunikationsnetz mit vier ISDN-Knoten 9, 10, 11 und 12 dargestellt. An den ISDN-Netzknoten 9 und 12 sind jeweils Endgeräte 13 bzw. 14 in Form von Telefonen dargestellt.

Außerdem ist ein Meßgerät 15 in Form eines PC's mit allen Verbindungen zwischen den ISDN-Netzknoten 9, 10, 11 und 12 verbindbar ausgestattet. Das Meßgerät 15 ist außerdem mit den ISDN-Netzknoten 9 und 12 direkt verbindbar ausgestattet, an denen die Endgeräte 13 bzw. 14 angeschlossen sind. Im vorliegenden Fall wird angenommen, daß die Verbindung zwischen den ISDN-Netzknoten 11 und 12 gestört ist, das heißt, daß eine Fehlerquelle 16 vorliegt.

Durch die Verwendung eines Endgerätes 13 bzw. 14 mit Einspeisung eines als Pilot bezeichneten Testsignals besteht die Möglichkeit, den Piloten an einer beliebigen Stelle der Verbindung auszukoppeln und aufzuzeichnen. Dies kann im einfachsten Fall technisch durch einen Spannungsschreiber realisiert werden. Durch Referenzmessungen wird damit die Fehlerquelle 16 auf einfachste Art und Weise lokalisierbar gemacht.

### Liste der Bezugszeichen

- 1: Schnittstelle S₀
- 2: Schnittstelle S_{2M}
- 3: Controller
- 4: Anzeige
- 5: digitale Auswertung
- 6: Vergleicher Gespräch/Testsignal
- 7: Codierer/Decodierer
- 8: analoge Auswertung
- 9-12: ISDN-Netzknoten
- 13 , 14: Endgeräte
- 15: Meßgerät
- 16: Fehlerquelle

## Patentansprüche

1. Verfahren zum Festellen, Festhalten und Lokalisieren von Unterbrechungen der utzkanäle in Telekommunikationsnetzen, insbesondere mit ISDN-Verbindungen, bei dem zunächst ein Ton erzeugt wird, der in das Netz eingespeist und ständig oder zyklisch zur Sprachpausenfüllung übertragen wird, wodurch eine Sprechpause von einer Unterbrechung des Nutzkanals messtechnisch unterscheidbar wird, um bei einer gestörten bestehenden Verbindung eine Unterbrechung messtechnisch zu ermitteln und zu lokalisieren, bei dem ein Oszillator den Ton mit einer Frequenz von 100 Hertz und mit einer Amplitude von 50 mV erzeugt, der Ton noch von einem Codierer/Decodierer (7) codiert wird und beim Empfänger nicht hörbar ist, der eingespeiste Ton der Sprache überlagert wird, und beidem in Sprachpausen das durch den Ton entstehende Bitmuster als Pilot ständig übertragen wird, der im Störungsfall bis zu der Stelle messtechnisch verfolgbar ist, wo die Störung vorliegt.

2. Verfahren nach Patentanspruch 1 **dadurch gekennzeichnet, dass** zur Überprüfung der Messbarkeit des Pilotes im Nutzkanal eine analoge Auswertung erfolgt, wobei in einem ersten Schritt der Pilot von den Nutzsignalen getrennt wird, dass danach durch einen Vergleicher (6) ermittelt wird, ob der Pilot im Nutzkanal erkannt wurde oder nicht und dass bei positiver Auswertung eine Erkennung des Piloten durch eine Anzerge (4) angezeigt wird.

3. Verfahren nach Patentanspruch 2, **dadurch gekennzeichnet, dass** bei Verwendung der analogen Auswertung an digitalen Schnittstellen (1, 2) die Nutzsignale von der entsprechenden digitalen Schnittstelle (1 oder 2) in analoge Signale umgewandelt werden.

4. Schaltungsanordnung mit Mitteln gestaltet zur Durchführung des Verfahrens nach einem der Patentansprüche 1 bis 3.

## Claims

1. A method for detecting, recording and localizing interruptions of the bearer channels in telecommunications networks, in particular with ISDN connections, wherein initially a tone is generated which is then fed into the network and transmitted continuously or cyclically in order to fill any speech pauses, thereby making it possible to distinguish a speech pause from an interruption of the bearer channel by means of measuring techniques, in order to detect and localize, by means of measuring techniques, an interruption in case of a disturbed existing connection, wherein an oscillator generates the tone having a frequency of 100 Hertz and an amplitude of 50 mV, the tone is additionally coded by a coder/decoder (7) and is not audible at the receiver end, the fed-in tone is superposed onto the speech, and during speech pauses the bit pattern generated by the tone is continuously transmitted as a pilot, which, in the case of a disturbance, can be tracked by means of measuring techniques up to the location where the disturbance is present.

2. The method according to claim 1, **characterized in that**, in order to check the measurability of the pilot in the bearer channel, an analogue evaluation is carried out, wherein, in a first step, the pilot is separated from the wanted signals, that it is then determined by means of a comparator (6) whether or not the pilot was recognized in the bearer channel, and that, in case of a positive evaluation, the detection of the pilot is indicated by means of an indicator (4).

3. The method according to claim 2, **characterized in that**, when using the analogue evaluation at digital interfaces (1, 2), the wanted signals are converted by the corresponding digital interface (1 or 2) into analogue signals.

4. A circuit arrangement having means configured to carry out the method according to any one of claims 1 through 3.

## Revendications

1. Procédé pour la détection, l'enregistrement et localisation d'interruptions au niveau des canaux utiles dans des réseaux de télécommunication, notamment à connexions RNIS, dans lequel une tonalité est générée puis injectée dans le réseau et transmise de manière continue ou cyclique pendant les pauses vocales, permettant de distinguer, par des moyens de mesure, une pause vocale d'une interruption du canal utile, afin de détecter, par des moyens de mesure, une interruption dans une connexion existante perturbée, dans lequel un oscillateur génère la tonalité à une fréquence de 100 Hz et à une amplitude de 50 mV, la tonalité, inaudible au niveau récepteur, étant en plus codée par un codeur/décodeur (7) et la tonalité injectée se superposant à la parole, et dans lequel une configuration binaire générée par la tonalité est transmise pendant les pauses vocales de manière continue comme pilote qui, en cas de perturbation, peut être suivi, par des moyens de mesure, jusqu'à l'endroit où se situe la perturbation.

2. Procédé selon la revendication 1, **caractérisé en ce qu'**une analyse analogique est effectuée pour vérifier la mesurabilité du pilote dans le canal utile, le pilote étant séparé des signaux désirés dans une première étape, **en ce qu'**il est puis déterminé, à l'aide d'un comparateur (6), si le pilote a été reconnu ou non dans le canal utile et **en ce que**, en cas d'analyse positive, la reconnaissance du pilote est signalée par un affichage (4).

3. Procédé selon la revendication 2, **caractérisé en ce que**, en cas d'utilisation de l'analyse analogique au niveau d'interfaces numériques (1, 2), les signaux désirés sont convertis en signaux analogiques par l'interface numérique correspondante (1 ou 2).

4. Dispositif de circuit doté de moyens conçus pour la réalisation du procédé selon l'une quelconque des revendications 1 à 3.
